(19) Europäisches Patentamt
European Patent Office
Office européen des brevets

(11) **EP 1 496 688 A1**

(12) **EUROPEAN PATENT APPLICATION**
published in accordance with Art. 158(3) EPC

(43) Date of publication:
**12.01.2005 Bulletin 2005/02**

(51) Int Cl.⁷: **H04N 5/232**, H04N 5/225,
H04N 5/272, H04N 9/04
// H04N101:00

(21) Application number: **03725601.3**

(22) Date of filing: **17.04.2003**

(86) International application number:
**PCT/JP2003/004947**

(87) International publication number:
**WO 2003/088651 (23.10.2003 Gazette 2003/43)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **17.04.2002 JP 2002114597**

(71) Applicant: **SEIKO EPSON CORPORATION
Shinjuku-ku, Tokyo 163-0811 (JP)**

(72) Inventors:
• **SHIRAKAWA, Masanobu**
c/o Seiko Epson Corporation
**Suwa-shi, Nagano 392-8502 (JP)**
• **TSUJI, Shuji c/o Seiko Epson Corporation
Suwa-shi, Nagano 392-8502 (JP)**

(74) Representative: **Sturt, Clifford Mark et al
Miller Sturt Kenyon
9 John Street
London WC1N 2ES (GB)**

(54) **DIGITAL CAMERA**

(57)     A subtractive color process (P110) subjects, to a subtractive color process, inputted background data and outputs the background data subjected to the subtractive color process (subtractive color background data) to a reduction process (P120). In this subtractive color process, the gradation value of the background data is divided by the power of 2 to obtain a quotient as the gradation value of the subtractive color background data and store the subtractive color background data in a foreground area of a frame buffer. Thus, the capacity of the foreground area of the frame buffer can be reduced. A composite and display process (P130) synthesizes inputted data of an object to be photographed for display with background data for display to generate the composite image data. A driving signal is outputted to an LCD on the basis of the composite image data.

FIG. 1

**Description**

Technical Field

The present invention relates to a digital camera.

Background Art

A digital camera has a use for recording data as a material of a composite image, for instance. The composite image is widelyusedforprintingaphotographwithacomment, aphotograph seal with a frame etc. When the image of a frame is superposed on an obj ect to be photographed and the obtained image is printed, a portion of the object to be photographed may be sometimes trimmed. In such a case, background data to be synthesized is previously stored in a memory and the area of the object to be photographed that is synthesized with the background data and actually printed is displayed on an electronic view finder upon photographing. Thus, the object to be photographed can be easily recorded with a suitable composition.

JP-A-2001-45352 discloses a digital camera in which composite image data obtained by synthesizing data showing a background with data showing an object to be photographed is displayed on a liquid crystal panel, photographed, and then, the photographed image data is recorded.

JP-A-11-8831 discloses a technique that composite image data generated by a digital camera is printed by a printer directly connected to the digital camera.

However, the quantity of the data of an object to be photographed is apt to increase with the increase of the number of pixels of an image sensor. Accordingly, the capacity of a memory necessary for a process for synthesizing the data of the object to be photographed with the data of a background is also increased.

The present invention is devised to meet such a problem and it is an object of the present invention to provide a digital camera that reduces the capacity of a memory necessary for a composite process.

Disclosure of the Invention

In order to achieve the above-described object, a digital camera according to the present invention is a digital camera for generating data of an object to be photographed that is synthesized with background data and represents an image of the obj ect to be photographed, which comprises color subtracting means for subjecting, to a subtractive color process, the background data to generate subtractive color background data; and composite means for synthesizing the subtractive color background data with the data of the object to be photographed.

In the digital camera according to the present invention, since the subtractive color background data formedbyperforming the subtractive color process of the background data by the color subtracting unit is synthesizedwith the data of the object to be photographed, the capacity of a memory necessary for a composite process can be reduced. Thus, the capacity of the memory required, for instance, when composite image data is displayed on a display as a moving image to easily record the image of the object to be photographed with a suitable composition or when the composite image data is directly outputted to a printer from the digital camera to print the composite image data, can be reduced.

Further, a digital camera according to the present invention comprises image processing means for generating the data of an object to be photographed that represents the image of the object to be photographed on the basis of an output of an image sensor; color subtracting means for generating subtractive color background data by subjecting to a subtractive color process background data to be synthesized with the data of the object to be photographed; and displaying means for synthesizing the subtractive color background data with the data of the obj ect to be photographed and displaying the synthesized data on a display.

In the digital camera according to the present invention, the subtractive color background data formed by performing the subtractive color process of the background data by the color subtracting unit is synthesized with the data of the object to be photographed and the composite image data is displayed on the display. Thus, the capacity of a memory necessary for synthesizing and displaying processes can be reduced.

Further, in the digital camera according to the present invention, when the composite image data is displayed on the display as a moving image by the displaying unit, an instruction of a shutter is received. Thus, the image of the object to be photographed canbe easilyrecordedwith aproper composition.

The functions of a plurality of means provided in the present invention are respectively realized by hardware resources whose functions are specified by their structures themselves, hardware resources whose functions are specified by programs or the combinations of them. The functions of the plurality of means are not respectively limited to functions realized by hardware resources that are respectively physically independent.

Further, the present invention can be specified not only as the invention of a device, but also as the invention of a program, the invention of a recording medium on which the program is recorded and the invention of a method.

Brief Description of the Drawings

Fig. 1 is a data flow diagram for explaining a displayprocess of composite image data according to one embodiment of the present invention.

Fig. 2 is a block diagram showing a digital camera according to one embodiment of the present invention.

Fig. 3(A) is a rear view of the digital camera according to one embodiment of the present invention and Fig. 3(B) is a front view of the digital camera.

Fig. 4 is a schematic view showing background data and layout information recorded in a removable memory in one embodiment of the present invention.

Fig. 5 is a flow chart showing the flow of processes for storing the data of an object to be photographed in the removable memory in one embodiment of the present invention.

Fig. 6 is a schematic view for explaining composite image data according to one embodiment of the present invention.

Best Mode for Carrying Out the Invention

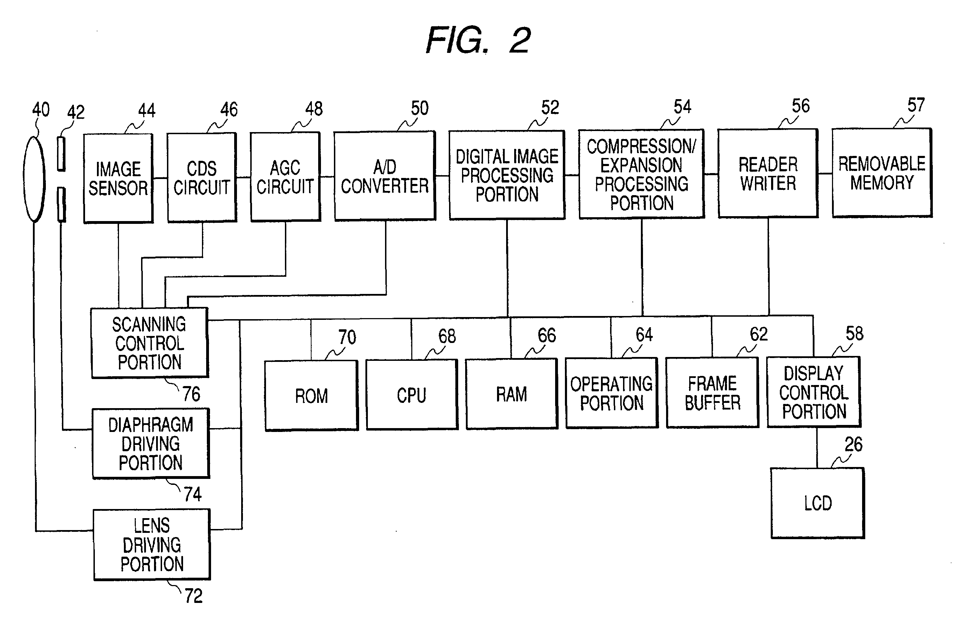

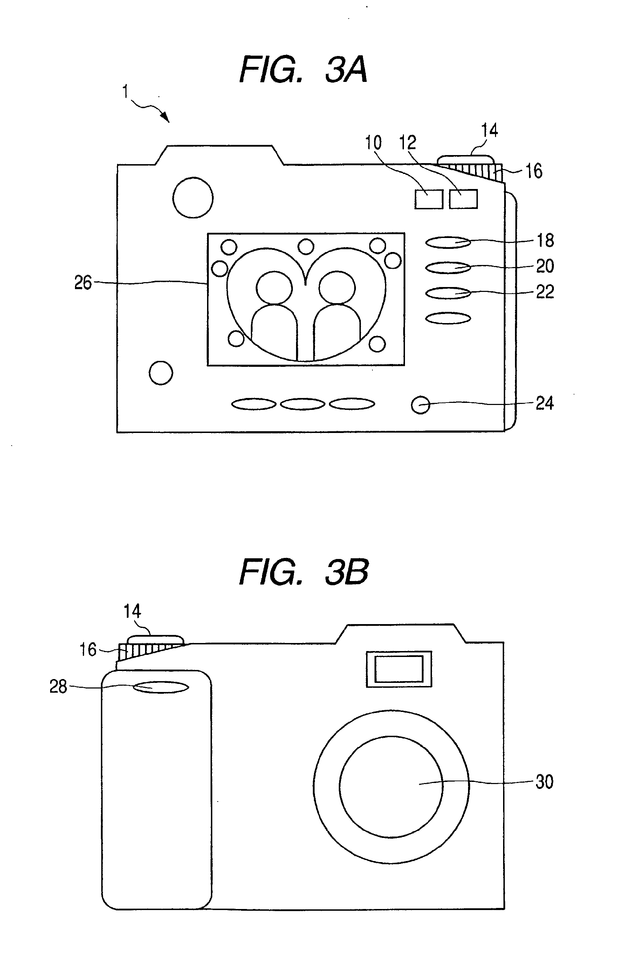

Now, a mode for carrying out the invention will be described below on the basis of an embodiment. Fig. 2 is a block diagram showing the structure of a digital camera 1 according to one embodiment of the present invention. Fig. 3(A) and Fig.3(B) are a front view and a rear view respectively showing the external appearance of the digital camera 1.

A lens driving portion 72 drives a lens 40 so that the image of an object to be photographed is formed on a light receiving portion of an image sensor 44 with a magnification corresponding to a signal inputted from a CPU 68. A diaphragm driving portion 74 drives an optical diaphragm 42 so that the quantity of light incident on the image sensor 44 becomes a quantity of incident light corresponding to the signal inputted from the CPU 68.

The image sensor 44 is an area image sensor in which a color filter array composed of four complementary color filters of C (Cyan), M (Magenta), Y (Yellow) and G (Green) is formed on a chip to store an electric charge obtained by photo-electrically transferring the received light for a prescribed time and output an electric signal corresponding to the quantity of the received lightfor each photoelectric transfer element. The color filter array may be composed of three complementary color filters of CMY or may be composed of primary color filters of R (Red), G (Green) and B(Blue).

A CDS circuit 46 performs a process for reducing noise included in an analog electric signal. AnAGC circuit 48 adjusts the level of the analog electric signal by adjusting a gain. An A/D converter 50 quantizes the analog electric signal subjected to the above-described processes to a digital signal of a prescribed gradation. A scanning control portion 76 outputs a shift pulse, a vertical transfer pulse and a horizontal transfer pulse to the image sensor 44 and outputs a drive pulse to the CDS circuit 46, the AGC circuit 48 and the A/D converter 50 to operate them synchronously with the image sensor 44.

A digital image processing portion 52 is composed of, for instance, a DSP (Digital Signal Processor), and performs an image forming process, a white balance correction, a gamma correction, a color space conversion or the like on the basis of an image signal outputted from the A/D converter 50. The digital image processing portion 52 prepares the data of an object to be photographed that shows, for instance, gradation values of R, G, and B or gradation values of Y, Cb and Cr for each pixel and stores the data in a RAM 66. The image forming process described herein mainly means a process for forming image data having the four gradation values of CMYG for each pixel under an interpolating process using digital data that shows the gradation value of any of CMYG corresponding to the output of each photoelectric transfer element.

A compression/expansion processing portion 54 compresses the data of the object to be photographed that is outputted from the digital image processing portion 52 in a photographing mode to form compressed image data in accordance with, for instance, a JPEG form. Under a reproducing mode, the compression/ expansion processing portion expands the compressed image data read from a removable memory 57 by using a reader writer 56 and stores the image data in the RAM 66. The removable memory 57 composed of a nonvolatile memory such as a flash memory is detachably attached to the reader writer 56. The reader writer 56 writes data in the removable memory 57 and reads the data stored in the removable memory 57.

An operating portion 64 includes various kinds of buttons having a power button 14 for turning ON/OFF a power source, a dial switch 16 for setting modes such as a photographing mode, a reproducing mode, a direct print mode or the like, a shutter button 28 for inputting an instruction of a shutter, abackground photographing button 18 for setting a background in the photographing mode, zoom buttons 10 and 12 for setting the magnification of a zoom lens, a next select key 20, a pre-select key 22, a determination key 24, etc. and a circuit for detecting the depression of the various kinds of buttons and the rotating angle of the dial switch 16.

A display control portion 58 performs the thinning process, the color space conversion process, the composite process or the like of the image data stored in the RAM 66 in accordance with the display area of a display to drive an LCD (Liquid Crystal Display) 26 as the display on the basis of the data that undergoes these processes. In a frame buffer 62, a background area and a foreground area are provided for individually storing image data to be synthesized. The display control portion 58 is provided with a composite process circuit for displaying a composite image on the LCD 26 in such a manner that the pixels of the image data stored in the background area are displayed more preferentially than the transparent pixels of the image data stored in the foreground area and the opaque pixels of the image data stored in the foreground area are displayed more preferentially than the pixels of the image data stored in the background area. Since the foreground area is used only when synthesizing and displaying operations are performed, the capacity of the foreground area may be set to a small value relative to the background area. Since background data used for a composite process is ordinarily composed of an artificial image such as line drawings, painted out materials, characters, etc., even when a gradation is lowered, the roughness of the image stands out less than a natural image such as an electrophotographic image. Specifically, for instance, the data of the object to be photographed with the gradation of RGB respectively having 8 bits is stored in a display area having the number of pixels of 320 x 240 and the background data with the gradation of RGB respectively having 4 bits is stored in the display area. At this time, a capacity of a memory necessary for the foreground area is described below, which is 1/2 times as much as a capacity of a memory necessary for the background area.

Capacity of background area: (8 + 8 + 8) x 320 x 240

Capacity of foreground area: (4 + 4 + 4) x 320 x 240

The CPU 68 performs a computer program stored in a ROM 70 to control the entire portion of the digital camera 1. The ROM 70 is a memory for storing the computer program or the like for executing various kinds of controls by the CPU 68. The RAM 66 is a memory for temporarily storing various kinds of programs or data.

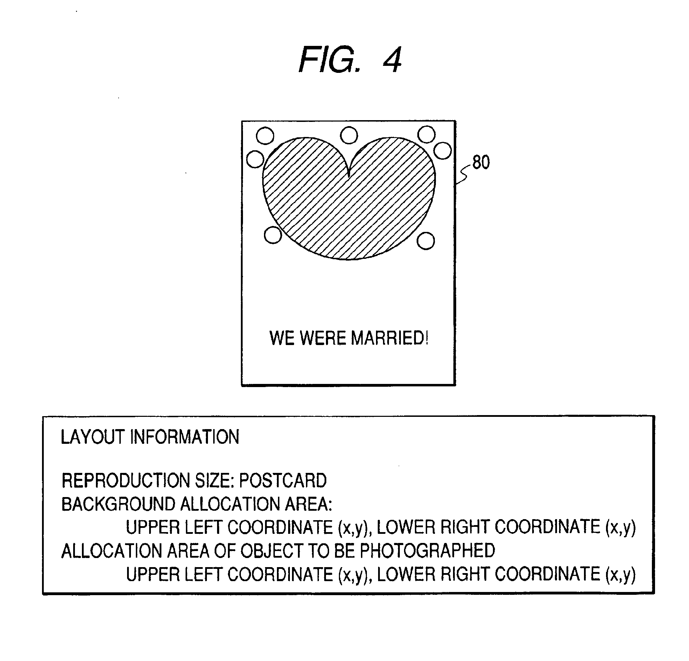

The digital camera 1 has the structure as described above. Now, the background data will be described below. Fig. 4 is a schematic view showing the background data and layout information recorded in the removable memory 57. The layout information for specifying the composite process of the background data and the data of the object to be photographed is associated with the background data and recorded in the removable memory 57.

The background data and the layout information specify a template for preparing prints such as a greeting card with a photograph, a seal with a photograph or the like and are previously stored in the ROM 70 or the removable memory 57. An explanation will be given hereinafter on the assumption that the background data and the layout information are stored in the removable memory 57. The background data represents an image 80 composed of the line drawings, thepaintedoutmaterials, the characters, etc. For instance, the gradation value of the background data is 8 bits for each color component such as YCbCr, RGB, etc. and a total of 24 bits represents one pixel. A hatched area is an area (transparent area) in which the data of the object to be photographed is inserted and synthesized. The area in which the data is inserted and synthesized may be specifiedbypreviouslysettingpredeterminedvaluesindicating a transparency such as R=OOH, G=OOH, B=OOH or the like to the gradation values of the pixels of the area. Separately from the data for specifying a background image, a so-called α channel may be specified which specifies which of the background image and the image of the object to be photographed is to be preferentially displayed. The background data and the layout information may be specified for each standard size of a reproducing medium such as a printing sheet. Each background data and each layout information may be specified for one design by regarding a specific size as a reference and the information may be converted in accordance with a reproducing size upon reproduction.

The layout information is composed of data showing: a reproducing size; coordinates for defining a rectangular area (an area to which the object to be photographed is allocated) to which the background data is allocated with respect to a reproducing area corresponding to the reproducing size; and coordinates for defining a rectangular area (an area to which the object to be photographed is allocated) to which the data of the object to be photographed is allocated with respect to the reproducing area.

In a printing system or a display system in which the background data and the data of the object to be photographed are synthesized and reproduced by using the layout information, the background data and the data of the object to be photographed are enlarged or reduced depending on the area to which the background is allocated and the area to which the object to be photographed is allocated, respectively. The enlarged or reduced data are allocated to the area to which the background is allocated and the area to which the object to be photographed is allocated. In an area where the area to which the background is allocated is overlapped on the area to which the object to be photographed is al located, the pixels of either the background data or the data of the object to be photographed are preferentially reproduced.

Further, after the data of the object to be photographed, the background data and the layout information are transferred to a personal computer or a standing alone printer, a composite process for a final output such as a printing operation is performed. When the composite process for the final output such as the printing operation is not performed in the digital camera 1, true background data used for forming composite image data may be stored in the personal computer or the standing alone printer and background data having a lower resolution and rougher gradation than those of the true background data may be stored in the removable memory 57 or the ROM 70. In such a way, the memory space of the digital camera 1 is not oppressed by the background data and the background data can be processed at high speed.

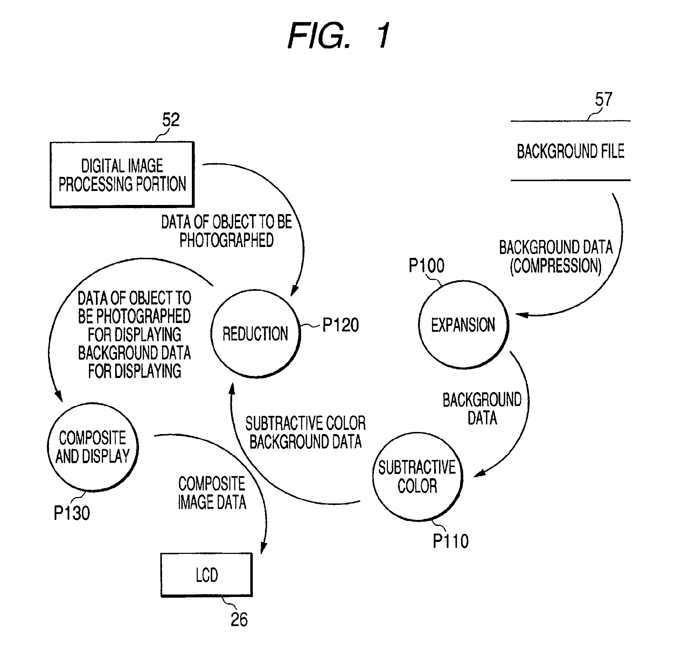

The above-description is directed to the background data. Now, the composite and displaying processes of the background data and the data of the object to be photographed will be described. Fig. 1 is a data flow diagram showing the composite and displaying processes of the background data and the data of the object to be photographed.

The background data stored in the removable memory 57 in a compressed state is read by the reader writer 56 and inputted to an expansion process P100. The expansion process P100 is a process mainly performed in the compression/expansion processing portion 54 to expand the inputted background data and output the expanded background data to a subtractive color process P110.

The subtractive color process P110 is a process mainly performed in the CPU 68 to perform the subtractive color process of the inputted background data and output the background data subjected to the subtractive color process (subtractive color background data) to a reduction process P120. In the subtractive color process, the gradation value of the background data is divided by the power of 2 to obtain a quotient as the gradation value of the subtractive color background data. For instance, the gradation value of each color component of the background data is divided by 16 and the gradation value of 8 bits of each color component is processed to obtain each color component of 4 bits under the subtractive color process. According to such a subtractive color process, for instance, a quantity of data for one pixel is reduced from 24 bits to 12 bits.

The reduction process P120 is a process performed by an exclusive circuit provided in the display control portion 58 or the CPU 68. To the reduction process P120, the data of the object to be photographed outputted from the digital image processing portion 52 and the subtractive color background data outputted from the subtractive color process P110 are inputted. In the reduction process P120, the data of the object to be photographed and the subtractive color background data are respectively subjected to a thinning process in accordance with the number of pixels of display areas. The data (the data of the object to be photographed for displaying and the background data for displaying) subjected to the thinning process are respectively outputted to a composite and display process P130.

The composite and display process P130 is a process mainly performed in the display control portion 58. In this process, the inputted data of the object to be photographed for displaying and the background data for displaying are synthesized together to form composite image data and output a driving signal to the LCD 26 in accordance with the composite image data. When the driving signal is outputted to the LCD 26 on the basis of the composite image data formed in the composite and display process P130, the composite image data in which the data of the obj ect to be photographed is synthesized with the background data is displayed on the LCD 26. Specifically, for instance, when the gradation value of a marked pixel is set to a gradation value previously allocated to a transparent color (for instance, R = OOH, G = OOH and B = OOH as described above), the driving signal is outputted to the LCD 26 on the basis of the gradation value of the marked pixel of the image data stored in the background area. Otherwise, the driving signal is outputted to the LCD 26 on the basis of the gradation value of the marked pixel of the image data stored in the foreground area. At this time, data selected as a source of the driving signal outputted to the LCD 26 corresponds to the composite image data.

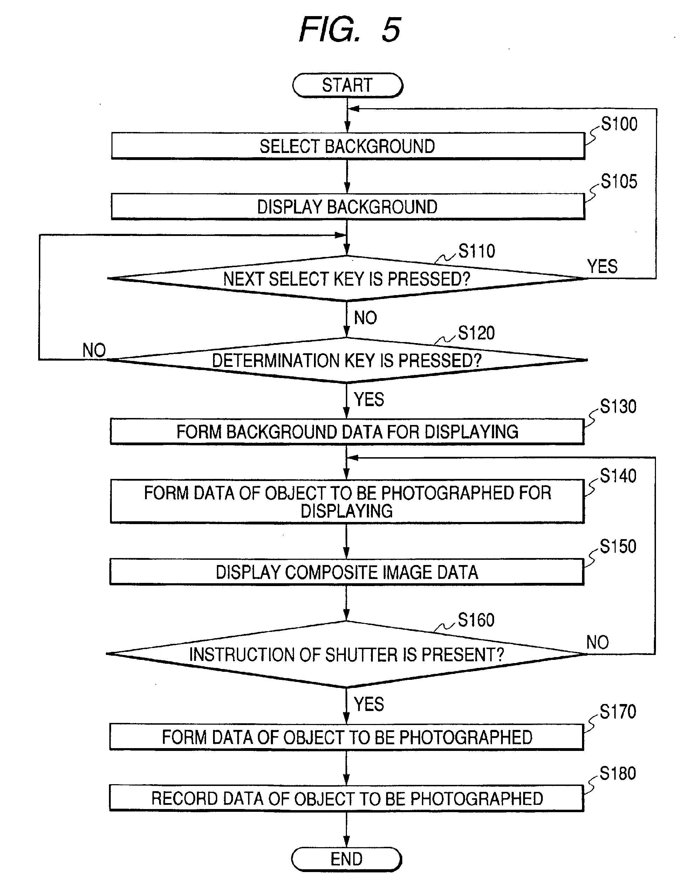

The above-description is directed to the composite and displaying processes of the background data and the data of the object to be photographed. Now, an operation of the digital camera 1 will be described. Fig. 5 is a flow chart showing the flow of processes for storing the data of the object to be photographed in the removable memory 57. A sequence shown in Fig. 5 is started by pressing down the background photographing button 18 by an operator in the photographing mode determined by the turning angle of the dial switch 16.

In step S100, any one of the background data stored in the removable memory 57 is selected. In step S105, the background data stored in the selected background data is displayed in such a manner as described below. Firstly, the background data is read from the removable memory 57 by the reader writer 56, and expanded in the expansion process P100 performed by the compression/expansion processing portion 54 and the expanded background data is stored in the RAM 66. According to the above-description, it is assumed that the background data is previously compressed and recorded. However, the background data may be recorded in a non-compressed state. Then, in the reduction process P120, a process for reducing the background data in accordance with the number of the pixels in the display area of the LCD 26 is performed. When the number of pixels of the display area of the LCD 26 is 320 x 240, and the number of the pixels of the background data is 640 x 480, the number of the pixels of the background data in length and breadth is thinned so as to be 1/2 as many as the above-described number. Thus, the background data for displaying that has 320 x 240 pixels is formed. In this connection, the background data for displaying that is adapted to the display area of the LCD 26 may be previously recorded in the removable memory 57 and the recorded background data may be displayed as it is. The background data edited for displaying is stored in the frame buffer 62. The display control portion 58 drives the LCD 26 on the basis thereof to display the background data. In the step S105, the subtractive color process P110 may not be performed. Since the data of the object to be photographed is not synthesized with the background data, the background data can be stored in the background area of the frame buffer 52. In step S110, when the next select key 20 is pressed down, the procedure returns to the step S100 to select next background data and repeat the above-described processes.

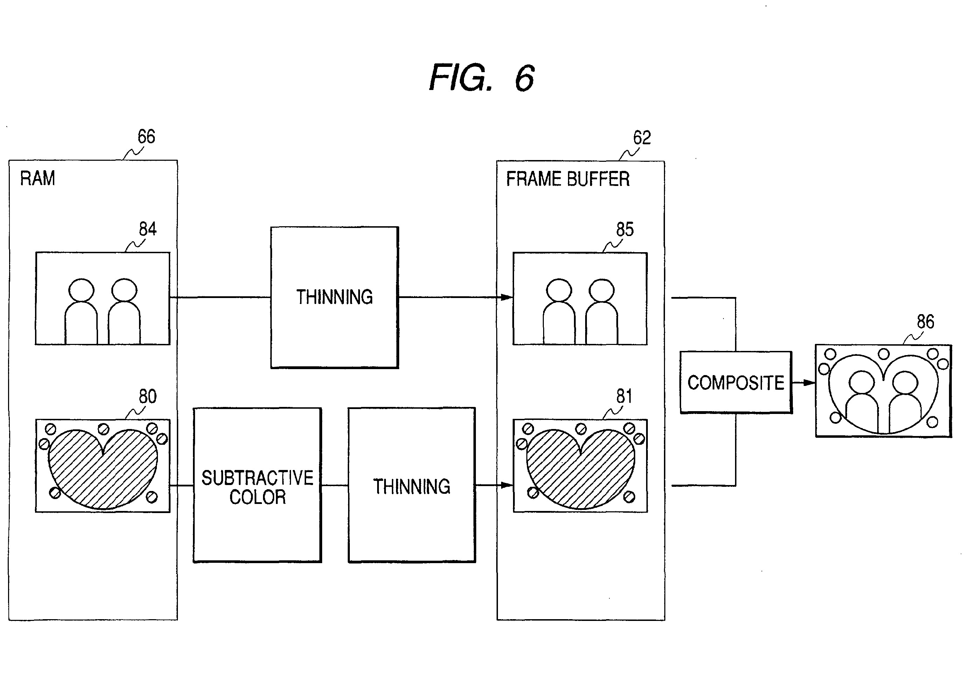

In step S120, when the determination key 24 is pressed, the CPU 68 performs the subtractive color process P110 in step S130 to perform the subtractive color process of the background data 80 stored in the RAM 66 in the step S105 and form the subtractive color background data having each gradation value of 4 bits. Further, the display control portion 58 or the CPU 68 performs the reduction process P120 to thin the subtractive color background data in accordance with the number of pixels of the display area, form the background data 81 for displaying and store the background data 81 in the foreground area of the frame buffer 62 as shown in Fig. 6.

S140 and S150 described subsequently are repeated until the shutter button 28 is pressed down to display the image of the object to be photographed in the transparent area of the background data as amoving image. In the step S140, aprescribed control signal is inputted to the scanning control portion 76 to scan an electric charge stored in the image sensor 44 for a prescribed time. Then, the data 84 of the object to be photographed that is formed in the digital image processing portion 52 is stored in the RAM 66 as shown in Fig. 6. Further, the display control portion 58 or the CPU 68 performs the reduction process P120 so that the data of the object to be photographed (data 85 of the object to be photographed for displaying) that is obtained by thinning the data 84 of the object to be photographed in accordance with the number of pixels of the display area is stored in the background area of the frame buffer 62.

In the step S150, the display control portion 58 performs the composite and display process P130 to synthesize the data 82 of the obj ect to be photographed for displaying that is stored in the background area of the frame buffer 62 with the background data 81 for displaying that is stored in the foreground area of the frame buffer 62 and output a driving signal to the LCD 26. As a result of this process, a composite image is displayed as shown in Fig. 3(A). Specifically, for instance, when the gradation value of the marked pixel of the background data 81 for displaying is set to a gradation value (for instance, R = OOH, G = OOH, and B = OOH as described above) that is previously allocated to a transparent color, the driving signal is outputted to the LCD 26 on the basis of the gradation value of the marked pixel of the data 85 of the object to be photographed for displaying. Otherwise, the driving signal is outputted to the LCD 26 on the basis of the gradation value of the marked pixel of the background data 81 for displaying. At this time, data selected as a source of the driving signal outputted to the LCD 26 is composite image data 86, which corresponds to the composite image data described in claims.

In step S160, it is detected whether or not the shutter instruction is inputted, that is, whether or not the shutter button 28 is pressed down. While the depression of the shutter button 28 is not detected, the procedure returns to the step S140 to repeat the above-described processes. In the step S160, when the depression of the shutter button 28 is detected, the procedure advances to step S170.

In the step S170, a prescribed control signal is inputted to the scanning control portion 76 to scan an electric charge stored in the image sensor 44 for a prescribed time. Then, the data of the object to be photographed is formed in the digital image processing portion 52 and the data of the object to be photographed is stored in the RAM 66 like the step S130.

In step S180, the data of the object to be photographed that is stored in the RAM 66 is compressed in the compression/expansion processing portion 54 to form compressed image data and the compressed image data is stored in the removable memory 57 by the reader writer 56. Further, in the step S180, data for associating the data of the object to be photographed recorded at this time with the background data selected by pressing down the determination key 24 in the step S110 is stored in the removable memory 57. The data obtained by sysnthesizing the background data with the data of the object to be photographed is not stored in the removable memory 57 and the data of the object to be photographed itself is stored in the removable memory 57 as it is. Accordingly, the background can be changed or cancelled after a photographing operation.

The above-description is directed to the flow of the processes for storing the data of the object to be photographed in the removable memory 57. In the embodiment of the present invention, color subtracting means described in claims is constituted by the CPU 68 or the like. The function thereof is realized by the subtractive color process S110 performed in the step S130. Composite means described in claims is constituted by the display control portion 58, the frame buffer 62 or the like. The function thereof is realized by the composite process P130 performed in the step S150. Image processing means described in claims is constituted by the CDS circuit 46, the AGC circuit 48, the A/D converter 50, thedigitalimageprocessing portion 52 or the like. The function thereof is realized by the processes of the step S140 and the step S170. Displaying means described in claims is constituted by the display control portion 58, the frame buffer 62 or the like and the function thereof is realized by the composite and display process P130 performed in the step S150.

In the above-described embodiment, since the background data subjected to the subtractive color process is stored in the foreground area of the frame buffer 62, the capacity of the foreground area of the frame buffer 62 can be reduced. Further, in the above-described embodiment, since the profile of the area of the data of the object to be photographed that is synthesized with the foreground of the background data is displayed, a photograph with a composition that a main portion (for instance, a face) of the object to be photographed is included in an area which is not trimmed in the composite process can be easily taken. Accordingly, in the above-described embodiment, the image data used in the composite process can be easily recorded with a proper composition.

In the above-described embodiment, the composite process in the display control portion 58 is explained. However, the present invention may be applied to, for instance, a composite process for printing.

**Claims**

1.  A digital camera for generating data of an object to be photographed that is synthesized with background data and represents an image of the object to bephotographed; the digital camera comprising:

    color subtracting means for subjecting the background data to a subtractive color process to generate color subtractive background data; and
    Composite means for synthesizing the color subtractive background data with the data of the object to be photographed.

2.  A digital camera comprising:

    image processing means for generating data of an object to be photographed that represents an image of the object to be photographed on the basis of an output of an image sensor;
    color subtracting means for generating subtractive color background data by subjecting, to a subtractive color process, background data to be synthesized with the data of the object to be photographed; and
    displaying means for synthesizing the subtractive color background data with the data of the object to be photographed and displaying the composite image data on a display.

3.  A digital camera according to claim 2, **characterized in that** when the composite image data is displayed on the display as a moving image by the displaying unit, a shutter instruction is received.

# FIG. 1

52

DIGITAL IMAGE PROCESSING PORTION

57

BACKGROUND FILE

DATA OF OBJECT TO BE PHOTOGRAPHED

BACKGROUND DATA (COMPRESSION)

DATA OF OBJECT TO BE PHOTOGRAPHED FOR DISPLAYING BACKGROUND DATA FOR DISPLAYING

P120

REDUCTION

P100

EXPANSION

COMPOSITE AND DISPLAY

SUBTRACTIVE COLOR BACKGROUND DATA

BACKGROUND DATA

P130

COMPOSITE IMAGE DATA

SUBTRACTIVE COLOR

LCD

P110

26

# FIG. 2

EP 1 496 688 A1

# FIG. 3A

# FIG. 3B

# FIG. 4

80

WE WERE MARRIED!

LAYOUT INFORMATION

REPRODUCTION SIZE: POSTCARD
BACKGROUND ALLOCATION AREA:
      UPPER LEFT COORDINATE (x,y), LOWER RIGHT COORDINATE (x,y)
ALLOCATION AREA OF OBJECT TO BE PHOTOGRAPHED
      UPPER LEFT COORDINATE (x,y), LOWER RIGHT COORDINATE (x,y)

## *FIG. 5*

```
                    ┌─────────────┐
                    │    START    │
                    └──────┬──────┘
                           │ ◄──────────────────────────────┐
            ┌──────────────▼──────────────┐                 │
            │      SELECT BACKGROUND       │~S100            │
            └──────────────┬──────────────┘                 │
            ┌──────────────▼──────────────┐                 │
            │      DISPLAY BACKGROUND      │~S105            │
            └──────────────┬──────────────┘                 │
                           │                                 │
         ┌────►────────────▼────────────────                │
         │         ◆ NEXT SELECT KEY IS PRESSED? ◆  YES ─────┘
         │                 │ NO              ~S110
         │                 │
         │        ◆ DETERMINATION KEY IS PRESSED? ◆
         │  NO             │ YES             ~S120
         └◄───             │
            ┌──────────────▼──────────────┐
            │ FORM BACKGROUND DATA FOR DISPLAYING │~S130
            └──────────────┬──────────────┘
                           │ ◄──────────────────────────────┐
            ┌──────────────▼──────────────┐                 │
            │ FORM DATA OF OBJECT TO BE PHOTOGRAPHED FOR │~S140  │
            │          DISPLAYING          │                 │
            └──────────────┬──────────────┘                 │
            ┌──────────────▼──────────────┐                 │
            │   DISPLAY COMPOSITE IMAGE DATA   │~S150         │
            └──────────────┬──────────────┘                 │
                           │                                 │
                  ◆ INSTRUCTION OF SHUTTER IS PRESENT? ◆  NO ─┘
                           │ YES            ~S160
            ┌──────────────▼──────────────┐
            │ FORM DATA OF OBJECT TO BE PHOTOGRAPHED │~S170
            └──────────────┬──────────────┘
            ┌──────────────▼──────────────┐
            │ RECORD DATA OF OBJECT TO BE PHOTOGRAPHED │~S180
            └──────────────┬──────────────┘
                    ┌──────▼──────┐
                    │     END     │
                    └─────────────┘
```

*FIG. 6*

| INTERNATIONAL SEARCH REPORT | International application No. |
|---|---|
| | PCT/JP03/04947 |

A. CLASSIFICATION OF SUBJECT MATTER
    Int.Cl⁷ H04N5/232, 5/225, 5/272, 9/04//H04N101:00

According to International Patent Classification (IPC) or to both national classification and IPC

B. FIELDS SEARCHED

Minimum documentation searched (classification system followed by classification symbols)
    Int.Cl⁷ H04N5/232, 5/225, 5/272, 9/04

Documentation searched other than minimum documentation to the extent that such documents are included in the fields searched
    Jitsuyo Shinan Koho         1922-1996    Jitsuyo Shinan Toroku Koho    1996-2003
    Kokai Jitsuyo Shinan Koho    1971-2003    Toroku Jitsuyo Shinan Koho    1994-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-350086 A (Fuji Photo Film Co., Ltd.),<br>15 December, 2000 (15.12.00),<br>Column 9, lines 25 to 32; Fig. 4<br>(Family: none) | 1-3 |

☐ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 July, 2003 (23.07.03) | 05 August, 2003 (05.08.03) |

| Name and mailing address of the ISA/ | Authorized officer |
|---|---|
| Japanese Patent Office | |
| Facsimile No. | Telephone No. |

Form PCT/ISA/210 (second sheet) (July 1998)